# EUROPEAN PATENT APPLICATION

(11) **EP 4 503 812 A1**
(43) Date of publication of application: **05.02.2025**
(21) Application number: 23774489.1
(22) Date of filing: 06.03.2023
(51) Int. Cl.: H04W 72/0457, H04W 84/12

(54) **WIRELESS COMMUNICATION TERMINAL AND WIRELESS COMMUNICATION METHOD, AND WIRELESS COMMUNICATION DEVICE AND WIRELESS COMMUNICATION METHOD**

(30) Priority: 24.03.2022 JP 2022048035
(71) Applicant: Sony Group Corporation, Tokyo 108-0075 (JP)
(72) Inventor: AIO Kosuke, Tokyo 108-0075 (JP); SUGAYA Shigeru, Tokyo 108-0075 (JP); TANAKA Yusuke, Tokyo 108-0075 (JP); HIRATA Ryuichi, Tokyo 108-0075 (JP)
(74) Representative: D Young & Co LLP
(86) International application number: PCT/JP2023/008366
(87) International publication number: WO 2023/181890

(57) **Abstract**

The present disclosure relates to a wireless communication terminal and a wireless communication method, and a wireless communication apparatus and a wireless communication method capable of realizing broadband uplink transmission.

The wireless communication terminal includes one PHY unit and a plurality of simple PHY units that performs channel scanning of each link, and executes switching processing for switching from the simple PHY unit to the PHY unit during the channel scanning for one link in a case where uplink transmission to a wireless communication apparatus is performed. The present disclosure can be applied to an eMLSR-compatible wireless communication terminal.

## Description

### TECHNICAL FIELD

The present disclosure relates to a wireless communication terminal and a wireless communication method, and a wireless communication apparatus and a wireless communication method, and more particularly, to a wireless communication terminal and a wireless communication method, and a wireless communication apparatus and a wireless communication method capable of realizing broadband uplink transmission.

### BACKGROUND ART

In recent years, there is an increasing demand for an increase in data traffic, and an increase in data capacity and an increase in peak throughput are also required in a wireless local area network (LAN). As one of the methods, Multi-Link Operation (hereinafter, referred to as MLO) that performs communication by simultaneously using a plurality of links having different operation frequencies attracts attention, and is expected to be standardized as a next-generation standard of IEEE802.11.

As disclosed in Non-Patent Document 1, as one of the MLO configuration methods, there is an enhanced multi-link single radio (eMLSR) mode allowed only for wireless communication terminals (Station: hereinafter, referred to as STA). In the eMLSR mode, the STA has one PHY unit (for example, compatible with IEEE802.11ax/IEEE802.11be) and a plurality of simple PHY units (for example, compatible with IEEE802.11a/IEEE802.11g/IEEE802.11n). At the time of signal detection, the STA scans a plurality of links with the simple PHY unit, and switches from the simple PHY unit to the PHY unit on the link on which the control signal from the access point (hereinafter, referred to as AP) is received, thereby enabling data reception using multi-input multi-output (MIMO). Even if the STA does not have a plurality of RF units or PHY units for each link, it is possible to flexibly use a plurality of links and realize throughput improvement and low latency transmission. Note that the eMLSR-compatible STA can also perform uplink transmission by performing backoff at the time of scanning.

### CITATION LIST

### NON-PATENT DOCUMENT

Non-Patent Document 1: Minyoung Park "Enhanced multi-link single radio operation," IEEE802.11-20/0562r7, July 2020.

### SUMMARY OF THE INVENTION

### PROBLEMS TO BE SOLVED BY THE INVENTION

In a case where an eMLSR-compatible STA performs uplink transmission, available bandwidth depends on performance of a simple PHY unit.

For example, in a case where the simple PHY unit supports only IEEE802.11a or IEEE802.11g, adjacent channels other than the primary channel cannot be scanned at the time of scanning, and thus only 20 MHz can be used at the maximum. Similarly, even in a case where the simple PHY unit is compatible with IEEE802.11n, 40 MHz can be used at the maximum, and it is not a configuration that can perform broadband uplink transmission.

The present disclosure has been made in view of such a situation, and an object thereof is to realize broadband uplink transmission.

### SOLUTIONS TO PROBLEMS

A wireless communication terminal according to a first aspect of the present disclosure is a wireless communication terminal including: one PHY unit; a plurality of simple PHY units that performs channel scanning of each link; and a communication control unit that executes switching processing for switching from the simple PHY unit to the PHY unit during the channel scanning for one link in a case where uplink transmission to a wireless communication apparatus is performed.

A wireless communication method according to a first aspect of the present disclosure is a wireless communication method in which a wireless communication terminal including one PHY unit and a plurality of simple PHY units that performs channel scanning of each link is configured to execute switching processing for switching from the simple PHY unit to the PHY unit during the channel scanning for one link in a case where uplink transmission to a wireless communication apparatus is performed.

A wireless communication apparatus according to a second aspect of the present disclosure is a wireless communication apparatus including a communication control unit that communicates with a wireless communication terminal that performs channel scanning of each link by using a plurality of simple PHY units, in which in a case where the wireless communication terminal performs uplink transmission, the communication control unit acquires information indicating whether or not a mode is a mode for executing switching processing for switching from the simple PHY unit to the PHY unit during the channel scanning for one link.

A wireless communication method according to a second aspect of the present disclosure is a wireless communication method in which a wireless communication apparatus is configured to: communicate with a wireless communication terminal that performs channel scanning of each link by using a plurality of simple PHY units; and in a case where the wireless communication terminal performs uplink transmission, acquire information indicating whether or not a mode is a mode for executing switching processing for switching from the simple PHY unit to the PHY unit during the channel scanning for one link.

In the first aspect of the present disclosure, in the wireless communication terminal including one PHY unit and a plurality of simple PHY units that performs channel scanning of each link, in a case where uplink transmission to the wireless communication apparatus is performed, switching processing for switching from the simple PHY unit to the PHY unit during the channel scanning for one link is executed.

In the second aspect of the present disclosure, in a case where the wireless communication terminal that performs channel scanning of each link by using a plurality of simple PHY units performs uplink transmission, information indicating whether or not a mode is a mode for executing switching processing for switching from the simple PHY unit to the PHY unit during the channel scanning for one link is acquired.

### BRIEF DESCRIPTION OF DRAWINGS

Fig. 1 is a diagram illustrating a configuration example of a wireless LAN system.
Fig. 2 is a block diagram illustrating a functional configuration example of an AP MLD.
Fig. 3 is a block diagram illustrating a functional configuration example of an STA MLD.
Fig. 4 is a diagram schematically illustrating a configuration of a wireless communication unit of an STA MLD.
Fig. 5 is a diagram illustrating operation of an STA MLD at the time of channel scanning.
Fig. 6 is a diagram illustrating operation of an STA MLD at the time of data transmission and reception.
Fig. 7 is a sequence diagram at the time of downlink transmission.
Fig. 8 is a sequence diagram at the time of uplink transmission.
Fig. 9 is a sequence diagram of entire communication in a wireless LAN system.
Fig. 10 is a diagram illustrating a configuration example of a Multi-Link Element.
Fig. 11 is a diagram illustrating a configuration example of an EML Operating Mode Notification frame.
Fig. 12 is a sequence diagram of communication according to a first embodiment.
Fig. 13 is a diagram illustrating operation of an STA MLD in an EMLSR High BW Scan Mode.
Fig. 14 is a flowchart for explaining a flow of an operation of an STA MLD.
Fig. 15 is a sequence diagram of communication according to a second embodiment.
Fig. 16 is a diagram illustrating a configuration example of a Block Ack.
Fig. 17 is a flowchart for explaining a flow of an operation of an AP MLD.
Fig. 18 is a sequence diagram of communication according to a third embodiment.
Fig. 19 is a diagram illustrating another configuration example of an EML Operating Mode Notification frame.
Fig. 20 is a flowchart for explaining a flow of an operation of an STA MLD.
Fig. 21 is a flowchart for explaining a flow of an operation of an AP MLD.
Fig. 22 is a diagram illustrating another configuration example of a Multi-Link Element.

### MODE FOR CARRYING OUT THE INVENTION

Hereinafter, modes for carrying out the present disclosure (hereinafter referred to as embodiments) will be described. Note that the description will be made in the following order.
1. System Configuration
2. eMLSR Operation and Problems Thereof
3. Overall Sequence and Frame Configuration
4. First Embodiment (Switching Processing During Channel Scanning)
5. Second Embodiment (First Example of Uplink and Downlink Conflict Avoidance)
6. Third Embodiment (Second Example of Uplink and Downlink Conflict Avoidance)
7. Fourth Embodiment (Reduction of Padding Time)
8. Summary

### <1. System Configuration>

### (Configuration Example of Wireless LAN System)

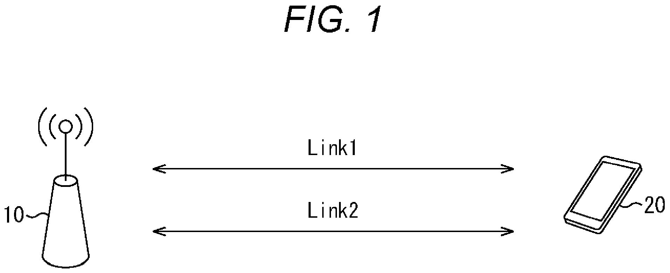

Fig. 1 is a diagram illustrating a configuration example of a wireless LAN system to which the technology according to the present disclosure can be applied.

The wireless LAN system illustrated in Fig. 1 includes an AP 10 as a wireless communication apparatus and an STA 20 as a wireless communication terminal. The AP 10 and the STA 20 have a multi-link device (MLD) configuration, and are connected by two links of Link1 and Link2. Hereinafter, the AP 10 and the STA 20 are referred to as an AP MLD 10 and an STA MLD 20, respectively.

Hereinafter, an entity that performs the processing related to Link1 in the AP MLD 10 is referred to as AP1 (affiliated with AP MLD 10), and an entity that performs the processing related to Link2 in the AP MLD 10 is referred to as AP2 (affiliated with AP MLD 10). Furthermore, an entity that performs the processing related to Link1 in the STA MLD 20 is referred to as STA1 (affiliated with STA MLD 20), and an entity that performs the processing related to Link2 in the STA MLD 20 is referred to as STA2 (affiliated with STA MLD 20).

Link1 and Link2 operate at different frequencies. For example, each link selects and uses one of channels such as a 5 GHz band for Link1 and a 6 GHz band for Link2. Not limited to this, in the technology according to the present disclosure, for example, each link may operate in the same 5 GHz band or 6 GHz band. Further, the AP MLD 10 and the STA MLD 20 may be connected by three or more links.

Note that the system configuration to which the technology according to the present disclosure can be applied is not limited to the configuration illustrated in Fig. 1 as long as there are a plurality of communication apparatuses to which connection is established and there is a communication apparatus as a peripheral terminal for each communication apparatus, and the positional relationship between the communication apparatuses does not matter as long as the above-described conditions are satisfied.

### (Configuration of AP MLD)

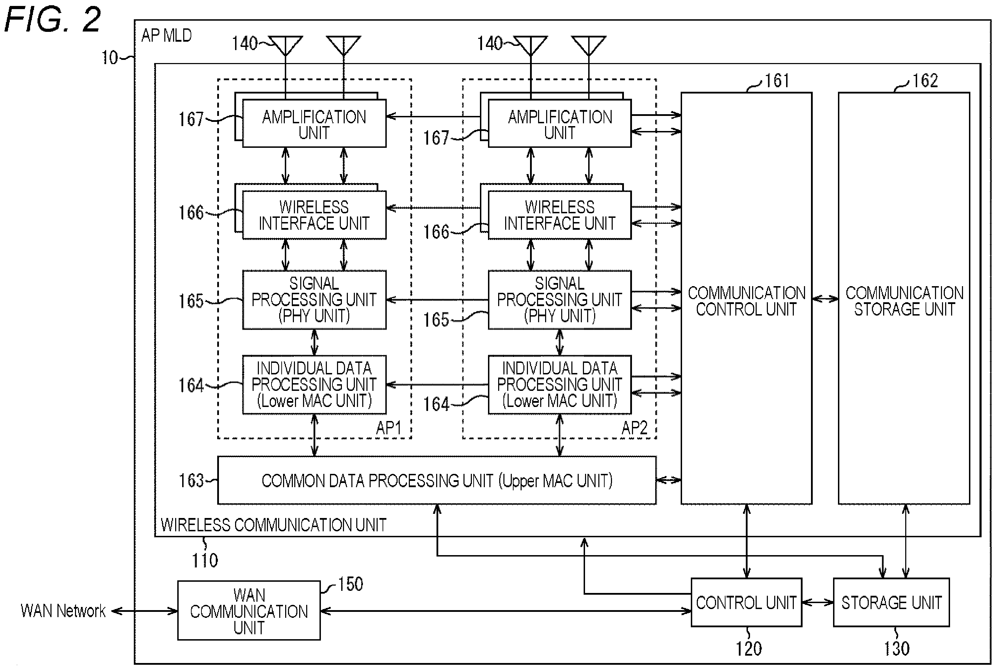

Fig. 2 is a block diagram illustrating a functional configuration example of the AP MLD 10.

The AP MLD 10 includes a wireless communication unit 110, a control unit 120, a storage unit 130, an antenna 140, and a WAN communication unit 150.

The wireless communication unit 110 includes a communication control unit 161, a communication storage unit 162, a common data processing unit 163, an individual data processing unit 164, a signal processing unit 165, a wireless interface unit 166, and an amplification unit 167.

The wireless communication unit 110 has functional blocks subsequent to the individual data processing unit 164 for each link, and the functional block on the left side in the drawing operates as an AP1 (affiliated with AP MLD 10), and the functional block on the right side operates as an AP2 (affiliated with AP MLD 10). Further, in the example of Fig. 2, both the AP1 and the AP2 include two sets of the antenna 140 and the amplification unit 167 as a 2×2 MIMO configuration. However, a configuration can be adopted in which more antennas and amplification units are included to enable high-dimensional MIMO transmission and reception processing.

The communication control unit 161 controls operation of each unit of the wireless communication unit 110 and information transmission between the units. Furthermore, the communication control unit 161 controls transfer of control information and management information to be notified to other communication apparatuses to each processing unit.

The communication storage unit 162 holds various types of information used by the communication control unit 161. Furthermore, the communication storage unit 162 holds a data packet transmitted from the AP MLD 10 and a received data packet. The transmission buffer that holds the data packet to be transmitted is included in the communication storage unit 162.

At the time of data transmission, the common data processing unit 163 performs sequence management of data held in the communication storage unit 162 and control information and management information received from the communication control unit 161, and performs an encryption process and the like. Thereafter, the common data processing unit 163 delivers the temporary data frame to the individual data processing unit 164 of the AP1 or the AP2 that has acquired the transmission right. At the time of data reception, the common data processing unit 163 performs reordering processing by decrypting the temporary data frame received from the individual data processing unit 164. Hereinafter, the common data processing unit 163 is also referred to as an upper MAC unit.

At the time of data transmission, the individual data processing unit 164 adds a media access control (MAC) header and an error detection code to the temporary frame data received from the common data processing unit 163, generates a data frame, and performs data frame coupling processing. At the time of data reception, the individual data processing unit 164 performs decoupling of the received data frame, analysis of the MAC header, and error detection, and delivers the data frame to the common data processing unit 163. Hereinafter, the individual data processing unit 164 is also referred to as a lower MAC unit.

At the time of data transmission, the signal processing unit 165 performs encoding, interleaving, and modulation on the data frame, and adds a physical header to generate a symbol stream. At the time of data reception, the signal processing unit 165 analyzes the physical header, performs demodulation, deinterleaving, decoding, and the like on the symbol stream, and generates a data frame. At this time, the signal processing unit 165 performs complex channel characteristic estimation and spatial separation processing as necessary. Hereinafter, the signal processing unit 165 is also referred to as a PHY unit.

At the time of data transmission, the wireless interface unit 166 performs digital-analog signal conversion, filtering, up-conversion, and phase control on the symbol stream, and generates a transmission signal. At the time of data reception, the wireless interface unit 166 performs down-conversion, filtering, and analog-digital signal conversion on the reception signal to generate a symbol stream.

The amplification unit 167 amplifies a signal input from the wireless interface unit 166 or the antenna 140. A part of the amplification unit 167 may be configured outside the wireless communication unit 110, or a part thereof may be included in the wireless interface unit 166.

Hereinafter, the wireless interface unit 166 and the amplification unit 167 are also collectively referred to as an RF unit.

The control unit 120 controls the entire wireless communication unit 110 and the communication control unit 161. The control unit 120 may perform a part of the processing performed by the communication control unit 161. Furthermore, the control unit 120 and the communication control unit 161 may be integrally configured.

The storage unit 130 holds information used by the wireless communication unit 110 and the control unit 120. The storage unit 130 may perform a part of the processing performed by the communication storage unit 162. Furthermore, the storage unit 130 and the communication storage unit 162 may be integrally configured.

The wide area network (WAN) communication unit 150 decodes a packet acquired from the Internet backhaul and delivers the packet to the wireless communication unit 110 via the control unit 120. The format of the delivered packet may be a state in which the IP header is directly added (access point mode) or a state in which the IP header is decrypted and removed (router mode).

Note that, in the example of Fig. 2, the wireless communication unit 110 is configured by one integrated circuit (IC), but the IC configuration is not limited thereto. For example, in the AP MLD 10, the wireless interface unit 166 may be mounted as an IC different from the wireless communication unit 110.

### (Configuration of STA MLD)

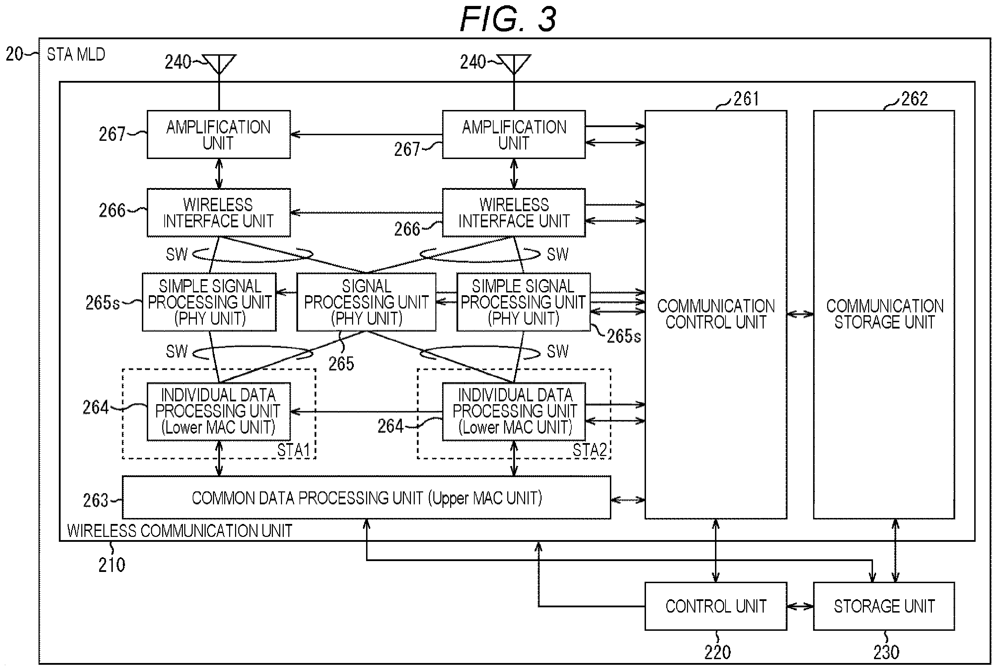

Fig. 3 is a block diagram illustrating a functional configuration example of the STA MLD 20.

The STA MLD 20 includes a wireless communication unit 210, a control unit 220, a storage unit 230, and an antenna 240.

The wireless communication unit 210 includes a communication control unit 261, a communication storage unit 262, a common data processing unit 263, an individual data processing unit 264, a signal processing unit 265, a wireless interface unit 266, and an amplification unit 267.

The wireless communication unit 210 includes an individual data processing unit 264 for each link, and the individual data processing unit 264 on the left side in the drawing operates as an STA1 (affiliated with STA MLD 20), and the individual data processing unit 264 on the right side operates as an STA2 (affiliated with STA MLD 20).

Each functional block of the wireless communication unit 210 basically has a function similar to each functional block of the wireless communication unit 110 (Fig. 2) of the AP MLD 10. However, the wireless communication unit 210 is different from the wireless communication unit 110 of the AP MLD 10 in including only one signal processing unit 265 and including two simple signal processing units 265s and pairs of wireless interface units 266 and amplification units 267 corresponding thereto.

The simple signal processing unit 265s can perform processing similar to the signal processing unit 265, but has a limited function as compared with the signal processing unit 265. For example, while the signal processing unit 265 additionally performs transmission and reception in a wide bandwidth such as 160 MHz or 320 MHz at the maximum according to the operation mode, the simple signal processing unit 265s can perform transmission and reception only in a bandwidth such as 20 MHz or 40 MHz. Besides this, the simple signal processing unit 265s is inferior to the signal processing unit 265 in various kinds of performance such as a usable modulation scheme and a transmittable or receivable frame format.

On the other hand, since the processing capability of the simple signal processing unit 265s as a functional block is reduced, there is also an advantage that mounting is facilitated and power consumption can be suppressed. In a wireless communication terminal such as a small terminal in which it is difficult to mount a plurality of signal processing units, it is expected that a simple signal processing unit is mounted instead of the signal processing unit as in the STA MLD 20 in Fig. 3. Hereinafter, the simple signal processing unit is also referred to as a small PHY unit (simple PHY unit).

In addition, switches SW are provided between the individual data processing unit 264 and the signal processing unit 265 and the simple signal processing unit 265s, and between the signal processing unit 265 and the simple signal processing unit 265s and the wireless interface unit 266. The STA MLD 20 determines which functional block is used in which link at the time of state transition such as at the time of channel scanning or at the time of data transmission and reception, and switches the switch SW. It is assumed that a certain time is required to switch these switches SW.

Note that, in Fig. 3, the functions of the control unit 220, the storage unit 230, and the antenna 240 other than the wireless communication unit 210 are basically similar to the functions of the control unit 120, the storage unit 130, and the antenna 140 in Fig. 2, and thus, description thereof is omitted.

### <2. eMLSR Operation and Problems Thereof>

### (eMLSR Operation of Wireless LAN System)

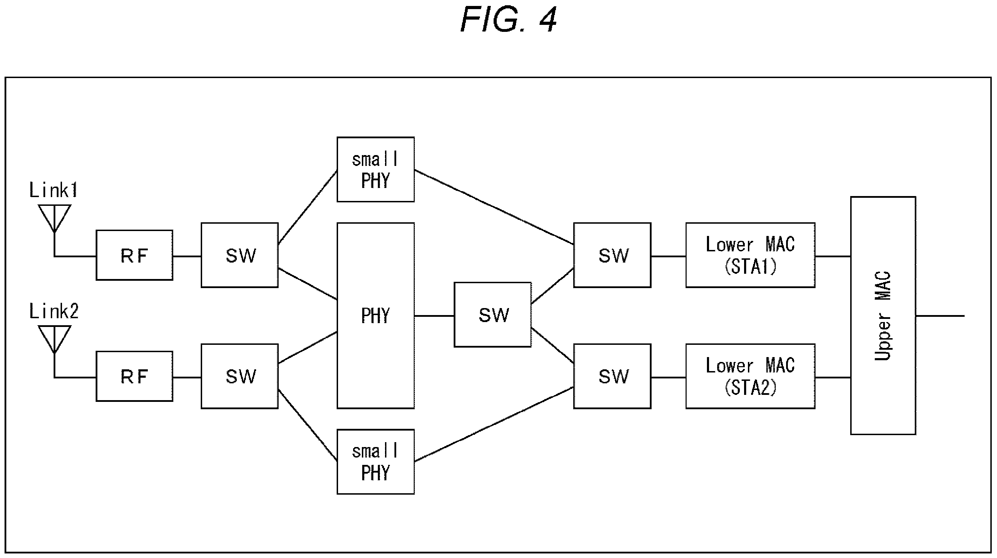

Fig. 4 is a diagram schematically illustrating a configuration of the wireless communication unit 210 of the STA MLD 20 described with reference to Fig. 3.

As described above, in the STA MLD 20, the switch SW connects the RF unit and the PHY unit/small PHY unit, and connects the PHY unit/small PHY unit and the lower MAC unit (STA1 and STA2), and the functional block to be used changes according to the situation.

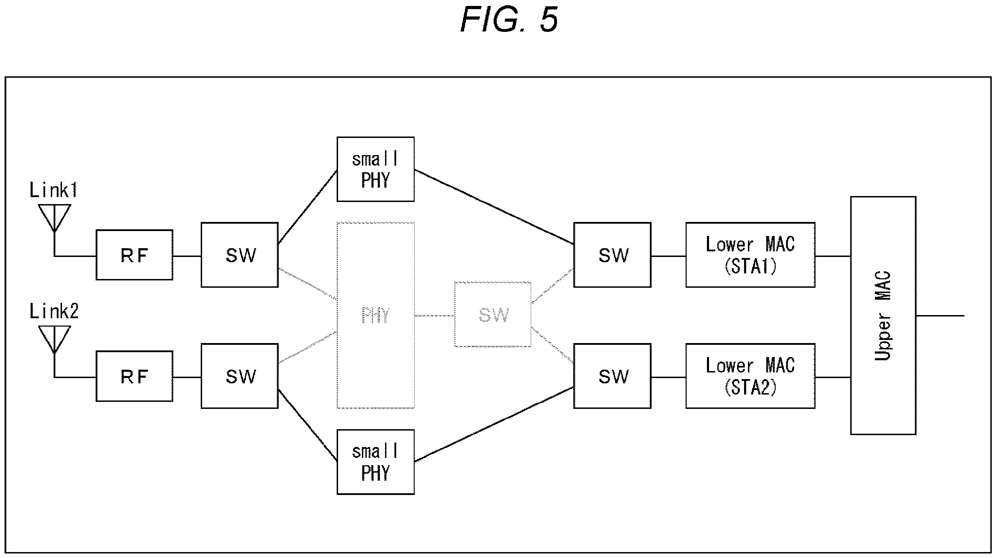

Fig. 5 is a diagram illustrating an operation of the STA MLD 20 at the time of channel scanning.

As illustrated in Fig. 5, the STA MLD 20 operates to scan signals with both Link1 and Link2 at the time of channel scanning. That is, the lower MAC unit (STA1) and the lower MAC unit (STA2) are connected to the small PHY unit, and each small PHY unit is connected to the RF unit (antenna). The small PHY unit scans some limited frames (for example, MU-RTS described later).

As described above, by performing the channel scanning using both Link1 and Link2, transmission and reception of data can be performed in the link for which the transmission right has been previously acquired, so that an access delay can be reduced. In addition, the power consumption can be suppressed by putting the unused PHY unit into the sleep state. Note that the channel scanning mentioned here also serves as backoff processing performed by the STA MLD 20 at the time of uplink transmission.

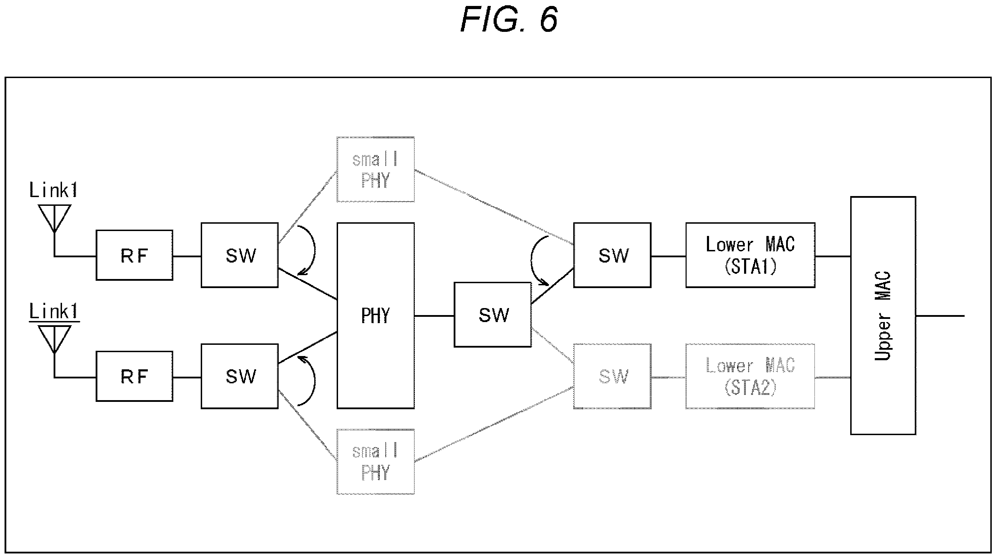

Fig. 6 is a diagram illustrating an operation of the STA MLD 20 at the time of data transmission and reception.

Here, a case where the STA MLD 20 receives an MU-RTS (multi-user transmission request) from the AP MLD 10 in Link1 will be described. However, a similar operation is performed in a case where STA MLD 20 receives an MU-RTS from the AP MLD 10 in Link2.

After receiving the MU-RTS addressed to the STA MLD 20 by Link1, the STA MLD 20 switches the switch SW such that the lower MAC unit (STA1) and the PHY unit, and the PHY unit and the RF units (antennas) are connected.

As a result, at the time of data transmission and reception, the STA MLD 20 can perform broadband signal reception and high data rate data transmission and reception using the PHY unit. Furthermore, the STA MLD 20 can perform MIMO transmission and reception while effectively using the RF unit (antenna) held by changing the operation frequency so that the RF unit (antenna) used for channel scanning of Link2 until immediately before is used for data transmission and reception of Link1.

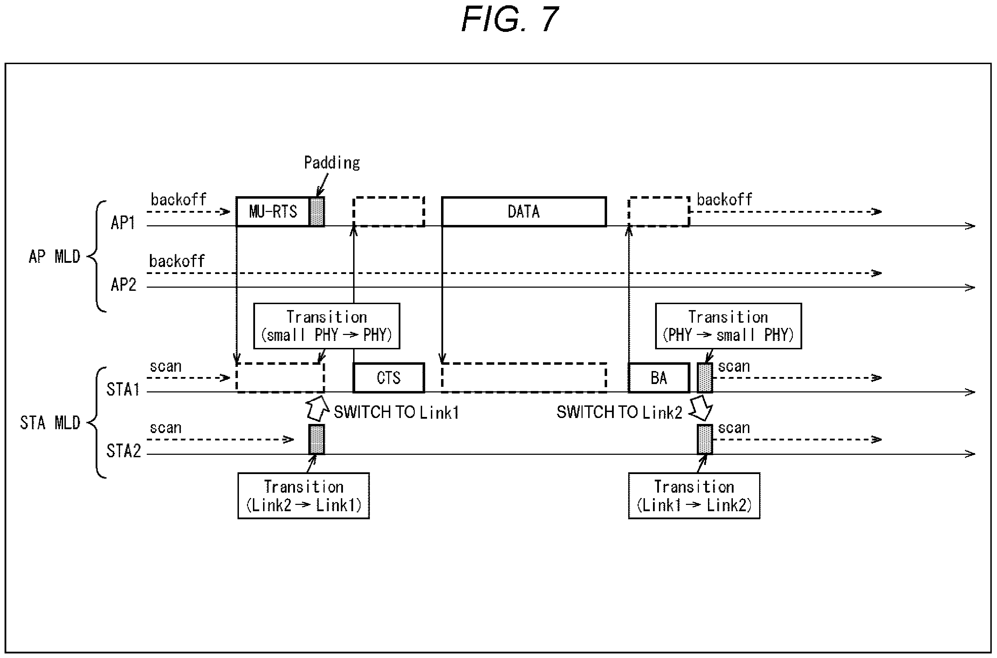

Fig. 7 is a sequence diagram at the time of downlink transmission in the wireless LAN system.

Here, a case where the AP1 belonging to the AP MLD 10 acquires the transmission right by backoff prior to the AP2 will be described, but a similar sequence is also applied to a case where the AP2 belonging to the AP MLD 10 acquires the transmission right by backoff prior to the AP1.

First, the AP1 transmits an MU-RTS to the STA1. When the STA1 acquires the MU-RTS, in a case where the signal is addressed to the STA1 itself, the STA1 transitions from the state of Fig. 5 to the state of Fig. 6 by switching the switch SW. At this time, the STA MLD 20 is expected to require a certain time for each operation such as switching of the switch SW, changing of the operation frequency of the RF unit, and activation of the PHY unit. Therefore, the AP1 can add a certain padding to the MU-RTS to provide a time for the STA MLD 20 to transition to the state of Fig. 6. For the padding time required therefor, a value negotiated and determined in advance between the AP MLD 10 and the STA MLD 20 is used.

The STA1 acquires the MU-RTS, transitions Link2 to Link1, and then transmits a CTS (transmission permission) to the AP1. Thereafter, the AP1 transmits a data signal to the STA1. After receiving the data signal, the STA1 transmits a response signal (Block Ack (BA)) and switches the switch SW, thereby returning from the state of Fig. 6 to the state of Fig. 5. Also in this case, it is expected that a certain time is required.

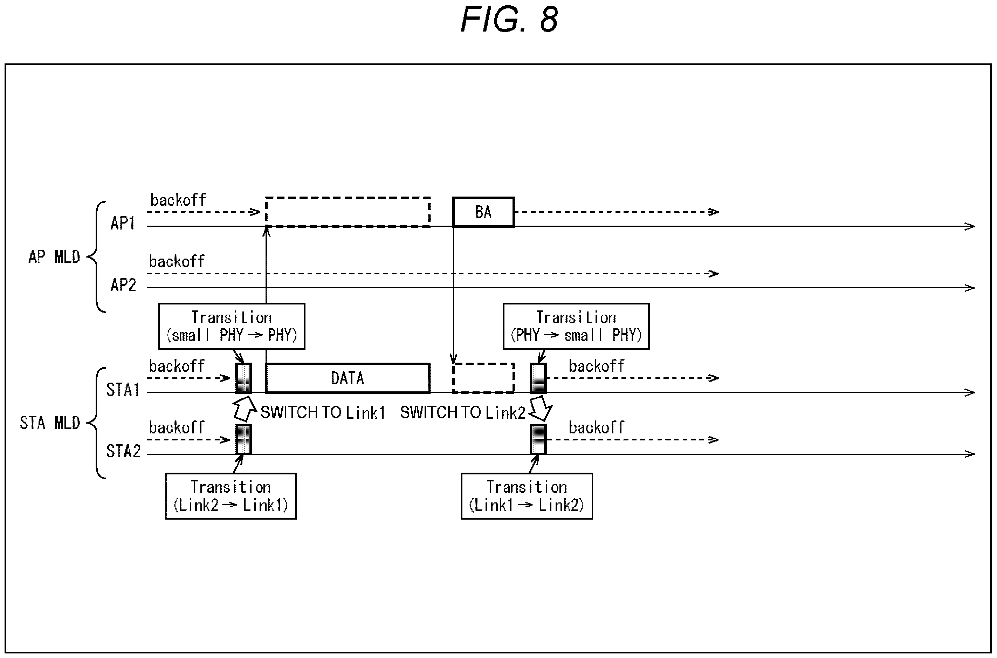

Fig. 8 is a sequence diagram at the time of uplink transmission in the wireless LAN system.

Here, a case where the STA1 belonging to the STA MLD 20 acquires the transmission right by backoff prior to the STA2 will be described. However, a similar sequence is also applied to a case where the STA2 belonging to the STA MLD 20 acquires the transmission right by backoff prior to the STA1.

After acquiring the transmission right, the STA1 transitions from the state of Fig. 5 to the state of Fig. 6 by switching the switch SW. At this time, the STA MLD 20 is expected to require a certain time for each operation such as switching of the switch SW, changing of the operation frequency of the RF unit, and activation of the PHY unit.

After transitioning Link2 to Link1, the STA1 transmits a data signal to the AP1. After receiving the data signal, the AP1 transmits a response signal (BA) to the STA1. After acquiring the response signal, the STA1 switches the switch SW to return from the state of Fig. 6 to the state of Fig. 5. Also in this case, it is expected that a certain time is required.

Note that the STA1 may transmit the MU-RTS (RTS) to the AP1 after acquiring the transmission right.

### (Problems)

As described above, also in the case of performing the uplink transmission, the STA MLD 20 performs channel scanning (backoff) using the simple signal processing unit 265s (small PHY unit), and switches to the signal processing unit (PHY unit) in a case where the transmission right is acquired. The STA MLD 20 can perform data transmission using multi-level modulation and multi-streams by using the PHY unit at the time of data transmission. However, broadband transmission, which is a main means for improving the data rate, cannot be realized only by the above-described operation.

In the case of performing broadband transmission, the STA1/STA2 needs to scan the usage status of the adjacent channel other than the primary channel for a certain period of time (for example, 25 µs according to the IEEE802.11 standard), and confirm that the adjacent channel is not in a busy state (a state in which the peripheral terminal is using the adjacent channel). However, it is assumed that the small PHY unit used by the STA MLD 20 at the time of channel scanning is compatible with only an older standard than the PHY unit, and there is no guarantee that the STA MLD 20 can scan an adjacent channel.

For example, in a case where the small PHY unit is compatible with only IEEE802.11a or IEEE802.11g, the STA MLD 20 can only perform channel scanning of 20 MHz of the primary channel and can only perform uplink transmission in the 20 MHz bandwidth. In a case where the small PHY unit is compatible with IEEE802.11n, uplink transmission up to 40 MHz bandwidth is possible, but uplink transmission of 80 MHz bandwidth or more is impossible.

On the other hand, it is conceivable to mount a higher-performance signal processing unit as the small PHY unit, but the advantage of easy mounting and suppression of power consumption is impaired. In addition, it is also conceivable to always perform channel scanning using the PHY unit for one of the links. However, the PHY unit needs to operate at all times, which may hinder low power consumption.

Therefore, in the technology according to the present disclosure, broadband uplink transmission is realized by switching from the small PHY unit to the PHY unit at a timing immediately before the transmission right is acquired during channel scanning. Furthermore, in the technology according to the present disclosure, it is possible to reduce the influence on the conflict with the downlink transmission generated during the switching to the PHY unit at the time of channel scanning.

### <3. Overall Sequence and Frame Configuration>

### (Sequence Diagram of Entire Communication)

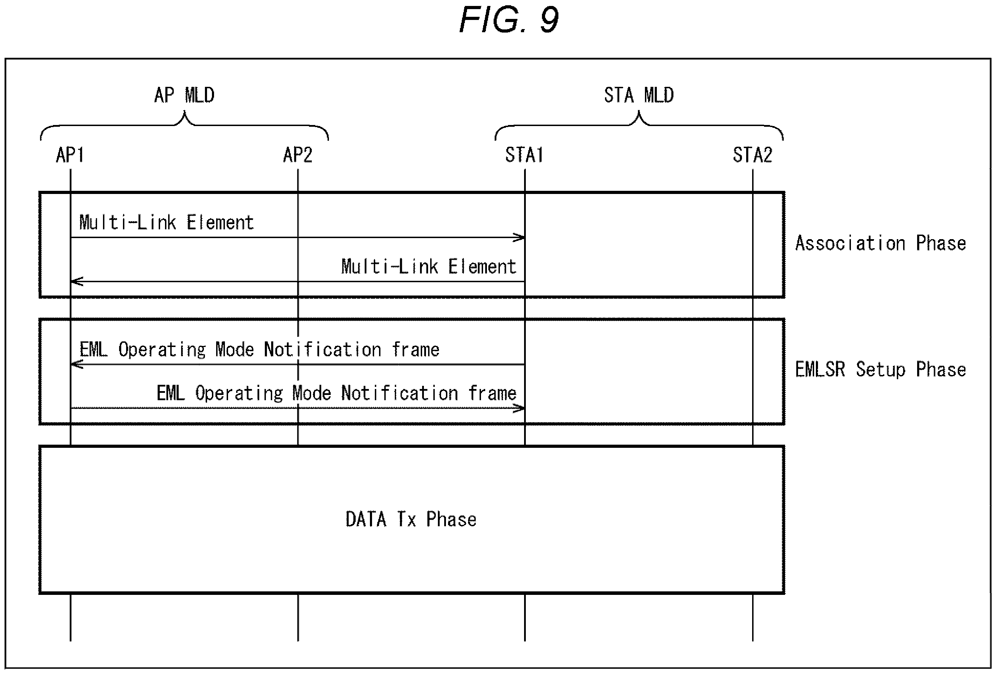

Fig. 9 is a sequence diagram of entire communication in the wireless LAN system (AP MLD 10 and STA MLD 20) of Fig. 1.

Communication in the embodiment of the wireless LAN system according to the present disclosure can be divided into three phases of Association Phase, EMLSR Setup Phase, and Data Tx Phase as illustrated in Fig. 9.

In the Association Phase, connection processing and authentication processing between the AP MLD 10 and the STA MLD 20 are performed. Fig. 9 illustrates an example in which connection processing between the AP2 and the STA2 is performed by frame exchange between the AP1 and the STA1. Conversely, the connection processing of the AP1 to the STA1 may be performed by frame exchange between the AP2 and the STA2. Furthermore, frame exchange related to the connection processing may be performed between the AP1 and the STA1 and between the AP2 and the STA2.

In the present embodiment, a Multi-Link Element is exchanged by any one of frames used for connection processing. Details of the Multi-Link Element will be described later.

In the EMLSR Setup Phase, setting for performing the eMLSR operation described above is performed between the AP MLD 10 and the STA MLD 20. Fig. 9 illustrates an example in which the eMLSR operation is set by frame exchange between the AP1 and the STA1. The present invention is not limited thereto, and the eMLSR operation may be set by frame exchange between the AP2 and the STA2.

In the present embodiment, the EML Operating Mode Notification frame is exchanged to set the eMLSR operation. Details of the EML Operating Mode Notification frame will be described later.

In the Data Tx Phase, data is transmitted and received between the AP MLD 10 and the STA MLD 20. Details of data transmission and reception in Data Tx Phase will be described later.

Note that the above-described three phases are not necessarily performed in the order illustrated in Fig. 9, and for example, the Data Tx Phase may be performed several times after the EMLSR Setup Phase is performed once. In addition, Data Tx Phase may be performed several times after Association Phase is performed, and then EMLSR Setup Phase may be performed.

### (Frame configuration)

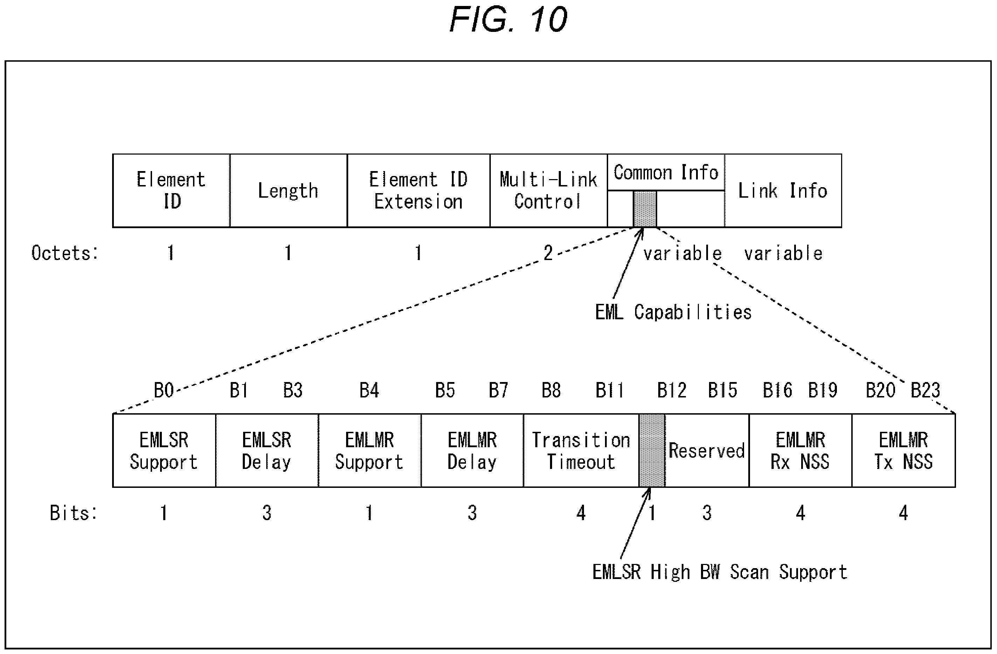

Fig. 10 is a diagram illustrating a configuration example of a Multi-Link Element.

The Multi-Link Element includes Element ID, Length, Element ID Extension, Multi-Link Control, Common Info, and Link Info.

The Element ID is an identifier indicating the type of the Element. In the present embodiment, an identifier indicating a Multi-Link Element is described.

The Length is information indicating the length of the Element.

The Element ID Extension is an identifier indicating the type of the Element assigned to the Element ID.

The Multi-Link Control is an identifier indicating a type of the Multi-Link Element. In the present embodiment, an identifier indicating "Basic Multi-Link Element" is described.

The Common Info is an information group necessary for Multi-Link setting.

The Link Info is an information group regarding each link.

As illustrated in Fig. 10, The Common Info includes an EML Capabilities subfield.

The EML Capabilities subfield includes EMLSR Support, EMLSR Delay, EMLMR Support, EMLMR Delay, Transition Timeout, EMLSR High BW Scan Support, Reserved, EMLMR Rx NSS, and EMLMR Tx NSS.

The EMLSR Support is information indicating whether or not the eMLSR mode can be implemented.

The EMLSR Delay is information regarding a transition time when the eMLSR mode is performed. In other words, the EMLSR Delay can be said to be information regarding the switching time required for the switching processing for switching from the small PHY unit to the PHY unit. The value of EMLSR Delay is used to determine the padding time of the MU-RTS.

The EMLMR Support is information indicating whether or not the eMLMR mode can be performed.

The EMLMR Delay is information regarding a transition time when the eMLMR mode is performed.

The Transition Timeout is information regarding an implementation period of the eMLSR mode/eMLMR mode.

The EMLSR High BW Scan Support is information indicating whether or not to enable broadband transmission when the eMLSR mode is performed. In other words, the EMLSR High BW Scan Support can be said to be information indicating whether or not it is possible to execute switching processing for switching from the small PHY unit to the PHY unit.

The Reserved may include arbitrary information.

The EMLMR Rx NSS and the EMLMR Tx NSS are the number of reception streams and the number of transmission streams in the eMLMR mode, respectively.

Although the Multi-Link Element in Fig. 10 is based on the configuration of the Multi-Link Element described in IEEE802.11be D1.3, in the technology according to the present disclosure, the configuration of the Multi-Link Element is not limited to this, and at least information regarding EMLSR High BW Scan Support is only required to be included. Furthermore, the Multi-Link Element in Fig. 10 is configured as a MAC frame, but may be configured as a TCP/IP frame as long as the above-described information is described.

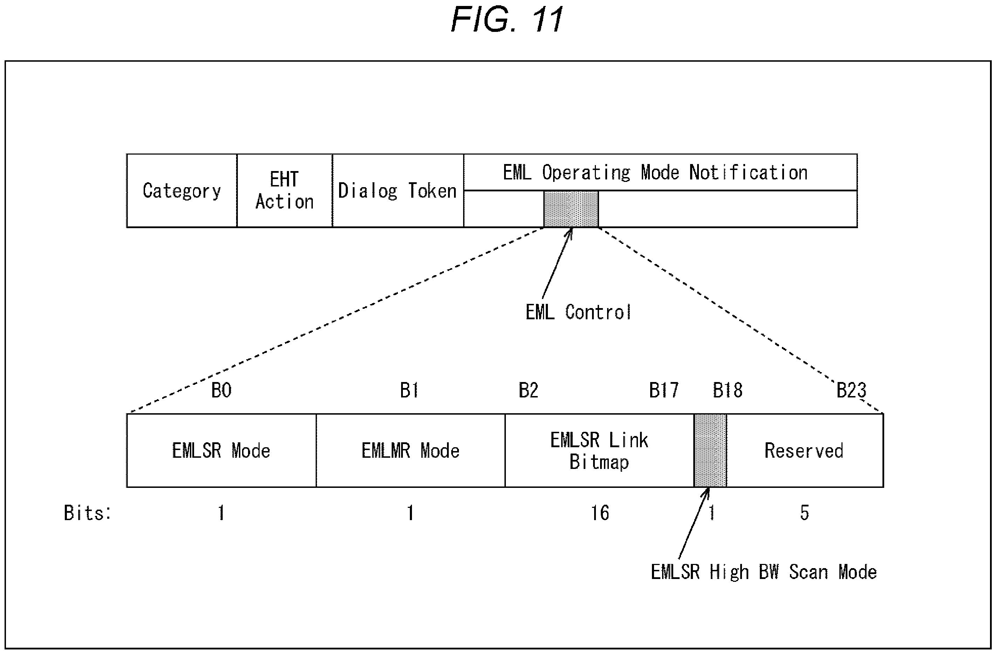

Fig. 11 is a diagram illustrating a configuration example of the EML Operating Mode Notification frame.

The EML Operating Mode Notification frame includes Category, EHT Action, Dialog Token, and EML Operating Mode Notification.

The Category is an identifier indicating the type of the Action frame. In the present embodiment, an identifier indicating an EHT Action frame is described.

The EHT Action is an identifier indicating the type of the EHT Action frame. In the present embodiment, an identifier indicating the EML Operating Mode Notification is described.

The Dialog Token is information regarding a processing number of a frame.

The EML Operating Mode Notification is an information group regarding an enhanced Multi-Link (EML) mode. In the present embodiment, as illustrated in Fig. 11, an EML Control field is included.

The EML Control field includes EMLSR Mode, EMLMR Mode, EMLSR Link Bitmap, EMLSR High BW Scan Mode, and Reserved.

The EMLSR Mode is information specifying whether or not to implement the eMLSR mode.

The EMLMR Mode is information specifying whether or not to implement the eMLMR mode.

The EMLSR Link Bitmap is a link identifier that implements the eMLSR mode.

The EMLSR High BW Scan Mode is information indicating whether or not broadband transmission is performed when the eMLSR mode is performed. In other words, the EMLSR High BW Scan Mode can be said to be information indicating whether or not it is a mode for executing the switching processing for switching from the small PHY unit to the PHY unit.

The Reserved may include arbitrary information.

The EML Operating Mode Notification frame of Fig. 11 is based on the configuration of the EML Operating Mode Notification frame described in IEEE802.11be D1.3. However, in the technology according to the present disclosure, the configuration of the EML Operating Mode Notification frame is not limited thereto, and at least information regarding EMLSR High BW Scan Mode is only required to be included. Furthermore, the EML Operating Mode Notification frame in Fig. 11 is assumed to be configured as a MAC frame, but may be configured as a TCP/IP frame as long as the above-described information is described.

Hereinafter, an embodiment related to data transmission and reception in Data Tx Phase described with reference to Fig. 9 will be described.

### <4. First Embodiment>

In the present embodiment, in the STA MLD 20 including one PHY unit (PHY unit) and a plurality of simple PHY units (small PHY units) that performs channel scanning of each link, in a case where performing uplink transmission to the AP MLD 10, the wireless communication unit 210 (communication control unit 261) executes switching processing for switching from the small PHY unit to the PHY unit during channel scanning for one link.

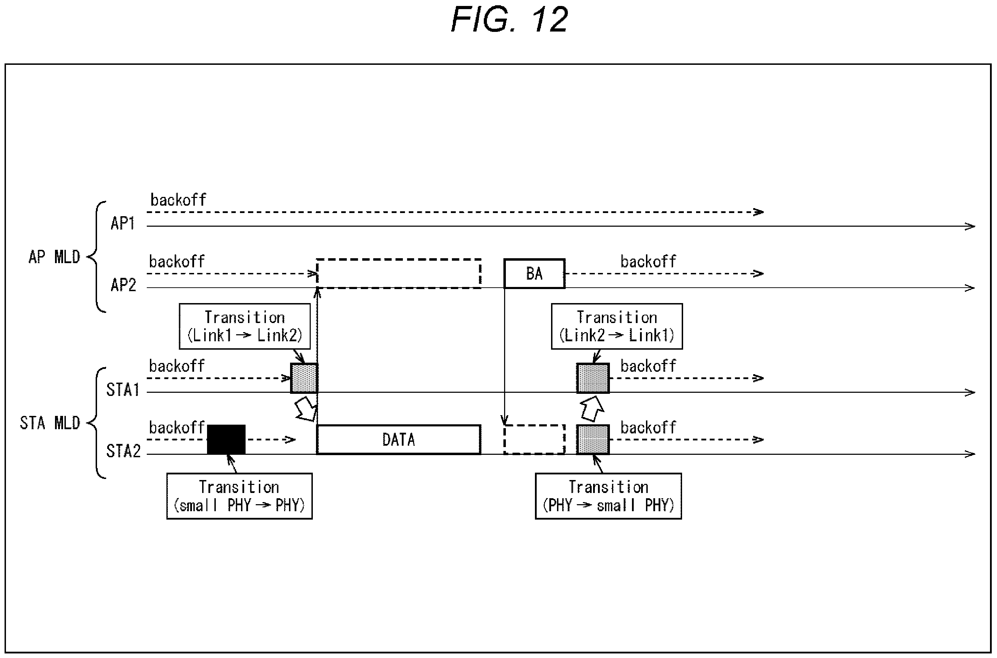

Fig. 12 is a sequence diagram of communication (during uplink transmission) in the first embodiment of the wireless LAN system according to the present disclosure.

Here, a case where the STA2 belonging to the STA MLD 20 has acquired the transmission right will be described, but a similar sequence is also applied to a case where the STA1 belonging to the STA MLD 20 has acquired the transmission right.

The sequence diagram of Fig. 12 is different from the sequence diagram of Fig. 8 in that channel scanning is resumed after switching from the small PHY unit to the PHY unit is performed during channel scanning (backoff) in the STA2.

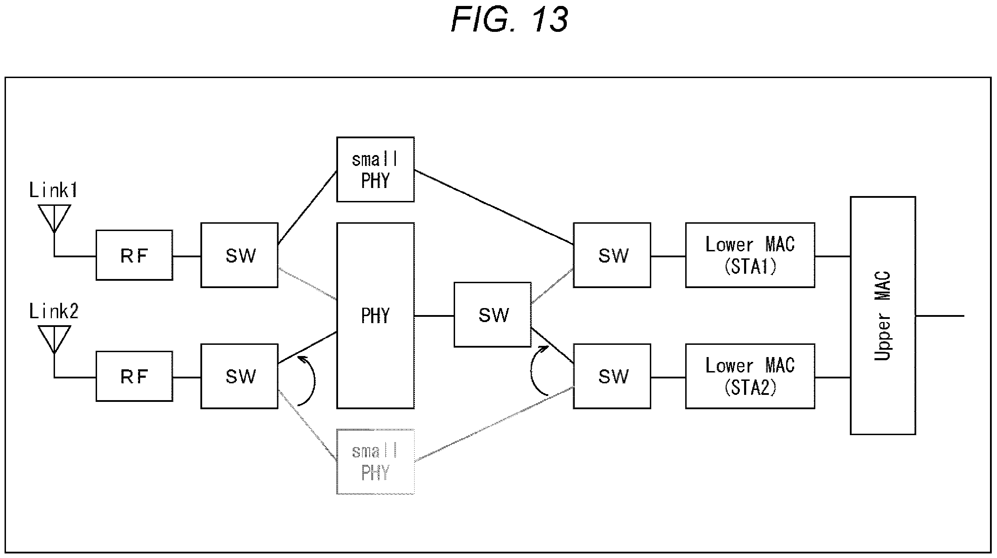

As described above, in a case where broadband transmission is performed, scanning of adjacent channels is only required to be performed for a certain period (for example, 25 µs). Therefore, Link2 for which the transmission right is acquired is switched from the small PHY unit to the PHY unit at the timing when the period has come before the transmission right is acquired. Specifically, as illustrated in Fig. 13, at the timing, the switch SW is switched so that the Lower MAC unit (STA2) and the PHY unit, and the PHY unit and the RF unit (antenna) are connected.

For example, in the case of general wireless LAN setup (access category 3), the backoff period is set to a time obtained by multiplying a random integer from 0 to 15 by 9 us. Therefore, if the backoff is performed and the small PHY unit is switched to the PHY unit at the timing when the remaining 3 slots (27 us) are reached, the adjacent channel can be scanned for a necessary period (25 µs).

The STA2 that has acquired the transmission right through Link2 transmits data to the AP2. At this time, in Fig. 12, data transmission by MIMO is performed by transitioning Link1 to Link2. In a case where MIMO transmission is not necessary, data transmission may be performed as it is without providing a transition period from Link1 to Link2.

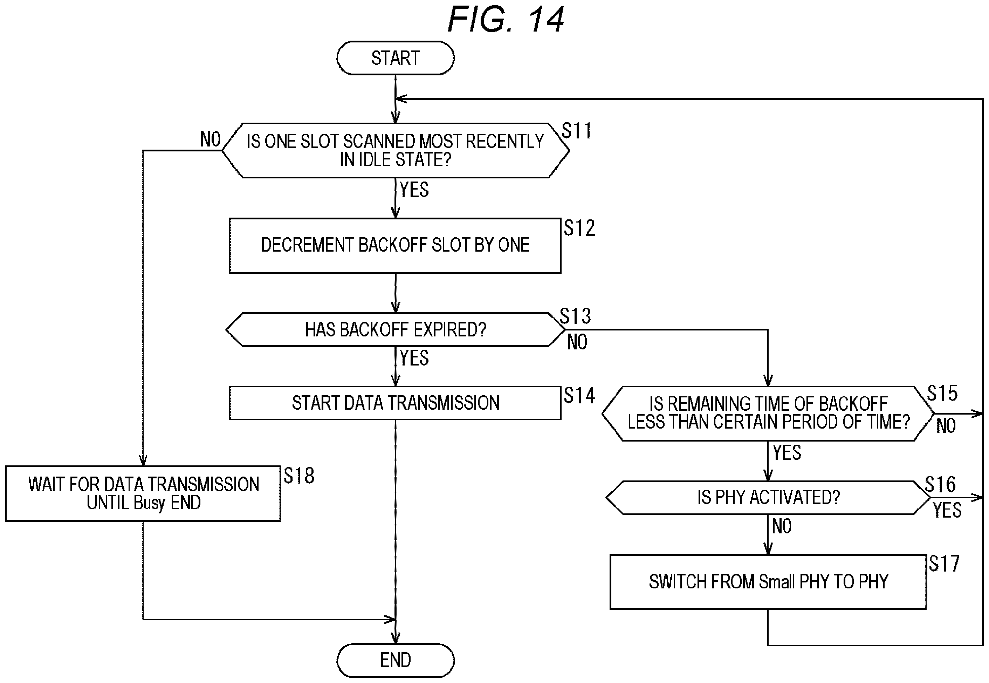

The flow of the operation of the STA MLD 20 in the EMLSR High BW Scan Mode will be described with reference to the flowchart in Fig. 14. The operation of Fig. 14 is performed for either Link1 or Link2, in other words, for either the STA1 or the STA2.

In step S11, the wireless communication unit 210 (communication control unit 261) determines whether or not one slot scanned most recently is in an idle state, that is, a state in which no peripheral terminal is used while performing channel scanning (backoff) one slot at a time.

In a case where it is determined that the most recently scanned one slot is in the idle state, the process proceeds to step S12, and the wireless communication unit 210 decrements the backoff slot by one.

In step S13, the wireless communication unit 210 determines whether or not the backoff has expired.

In a case where it is determined that the backoff has expired, the process proceeds to step S14, and the wireless communication unit 210 starts data transmission.

On the other hand, in a case where it is determined in step S13 that the backoff has not expired, that is, in a case where the backoff is continued, the process proceeds to step S15, and the wireless communication unit 210 determines whether or not the remaining time when the backoff slot is decremented next is less than a certain period of time. Specifically, it is determined whether or not the remaining time when the backoff slot is decremented next is less than 25 µs necessary for scanning the adjacent channel.

In a case where it is determined that the remaining time is less than the certain period of time, the process proceeds to step S16, and the wireless communication unit 210 determines whether or not the PHY unit is activated.

In a case where it is determined that the PHY unit is not activated, the process proceeds to step S17, and the wireless communication unit 210 switches the link from the small PHY unit to the PHY unit. Thereafter, the process returns to step S11, and backoff is continued.

On the other hand, in a case where it is determined in step S15 that the remaining time is not less than the certain period of time, or in a case where it is determined in step S16 that the PHY unit is activated (another link is being used), the switching from the small PHY unit to the PHY unit is not performed, the process returns to step S11, and the backoff is continued.

In addition, in a case where it is determined in step S11 that the most recently scanned 1 slot is not in the idle state, the process proceeds to step S18, and the wireless communication unit 210 waits for data transmission until the busy state, that is, the state used by the peripheral terminal ends.

According to the above configuration and processing, since an eMLSR-compatible STA MLD can perform channel scanning using the PHY unit only for a necessary period, it is possible to realize broadband uplink transmission while suppressing power consumption.

### <5. Second Embodiment>

In the present embodiment, an example of avoiding a conflict between switching to a PHY unit and downlink transmission will be described.

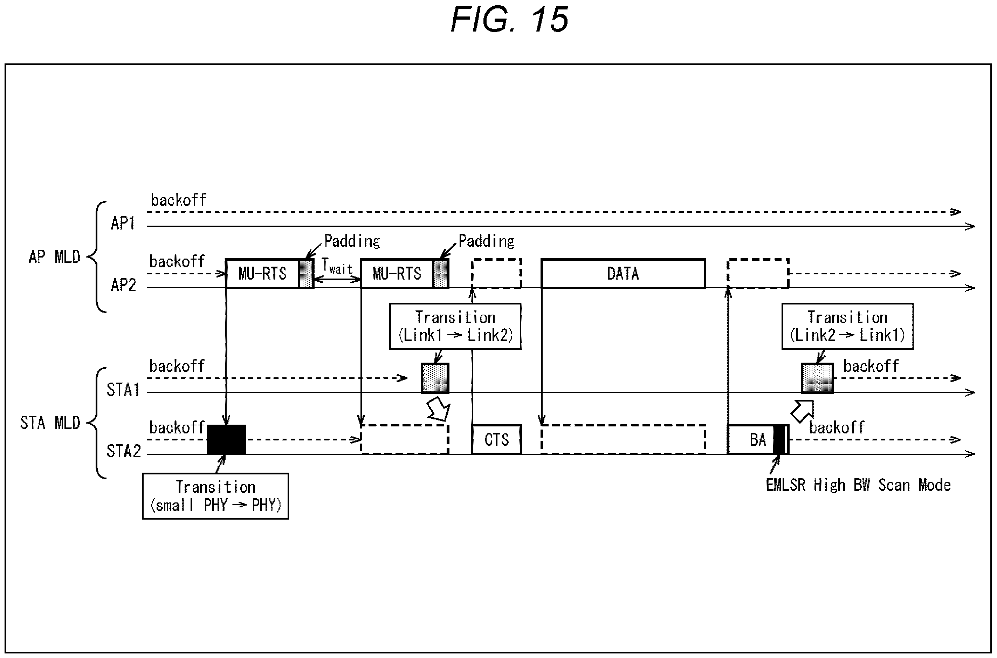

Fig. 15 is a sequence diagram of communication (during downlink transmission) in the second embodiment of the wireless LAN system according to the present disclosure.

The sequence diagram of Fig. 15 is different from the sequence diagram (first embodiment) of Fig. 12 in that the AP2 acquires the transmission right and transmits the MU-RTS during the switching from the small PHY unit to the PHY unit in the STA2. Note that a similar sequence is applied to a case where the AP1 acquires the transmission right during the switching from the small PHY unit to the PHY unit in STA1.

In a case where an MU-RTS is transmitted from the AP2 during the switching from the small PHY unit to the PHY unit in the STA2, there is a high possibility that the STA2 cannot correctly receive the MU-RTS according to the switching status of the switch SW or the activation status of the PHY unit. In this case, the AP2 cannot start data transmission to the STA2, and performs backoff again or attempts data transmission to another STA. In particular, in the latter case, when the transmission right of the STA2 is acquired, the AP2 is in the middle of data transmission, and uplink and downlink conflict occurs.

Therefore, as illustrated in Fig. 15, in a case where the CTS for the MU-RTS transmitted to the STA MLD 20 operating in the EMLSR High BW Scan Mode is not returned, the AP MLD 10 retransmits the MU-RTS to the same STA after a lapse of a certain period of time T_{wait}. The certain period of time T_{wait} is a time calculated on the basis of the EMLSR Delay included in the Multi-Link Element in Fig. 10, and can be expressed by, for example, the following Formula (1).
[Math. 1] Twait = max(TSIFS, TEMLSR_Delay - (TMU-RTS + TSIFS + TCTS)) ... (1)

In Formula (1), T_{SIFS} represents SIFS time (for example, 16 µs), and T_{EMLSR_Delay} is time indicated by EMLSR Delay. In addition, T_{MU-RTS} represents MU-RTS transmission time, and T_{CTS} represents CTS transmission time.

For example, in a case where the time indicated by the EMLSR Delay is 128 us, the MU-RTS transmission time is 48 us, and the CTS transmission time is 32 us, the AP2 retransmits the MU-RTS after 32 us elapses. As a result, even if the small PHY unit is switched to the PHY unit in STA2, it is possible to reliably avoid the switching period and retransmit the MU-RTS.

Furthermore, in the STA2, channel scanning (backoff) is resumed in a state of being connected to the PHY unit even after the transmission of the response signal (Block Ack (BA)). As a result, it is possible to resume the channel scanning (backoff) without providing a transition period from Link2 to Link1.

At this time, the STA2 writes information regarding the EMLSR High BW Scan Mode in the response signal (BA), thereby notifying the AP2 that the STA2 is performing channel scanning (backoff) using the PHY unit.

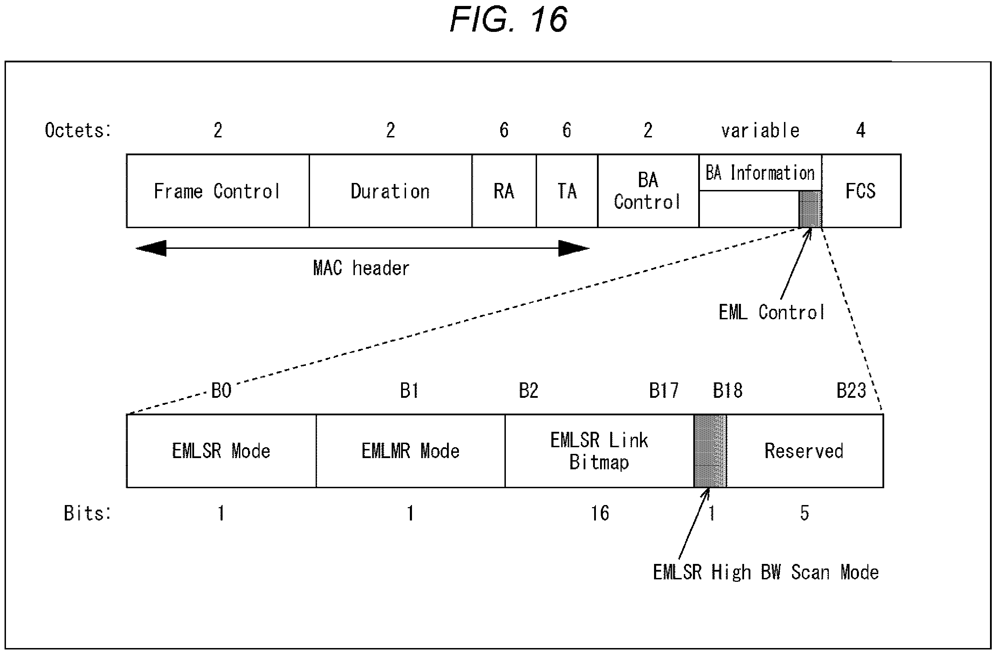

Fig. 16 is a diagram illustrating a configuration example of Block Ack in the present embodiment.

The Block Ack includes Frame Control, Duration, RA, TA, BA Control, BA Information, and FCS.

Although the detailed description of the Block Ack is omitted, the EML Control field described with reference to Fig. 11 is included in the variable length BA Information. The EML Control field includes EMLSR High BW Scan Mode indicating whether or not broadband transmission is performed when the eMLSR mode is performed.

Accordingly, in Fig. 15, when the AP2 acquires the transmission right again, transmission of the MU-RTS or addition of padding to the MU-RTS can be omitted.

Note that, in the example of Fig. 15, the EMLSR High BW Scan Mode is added to the response signal and transmitted. However, the EMLSR High BW Scan Mode may be added to another frame and transmitted.

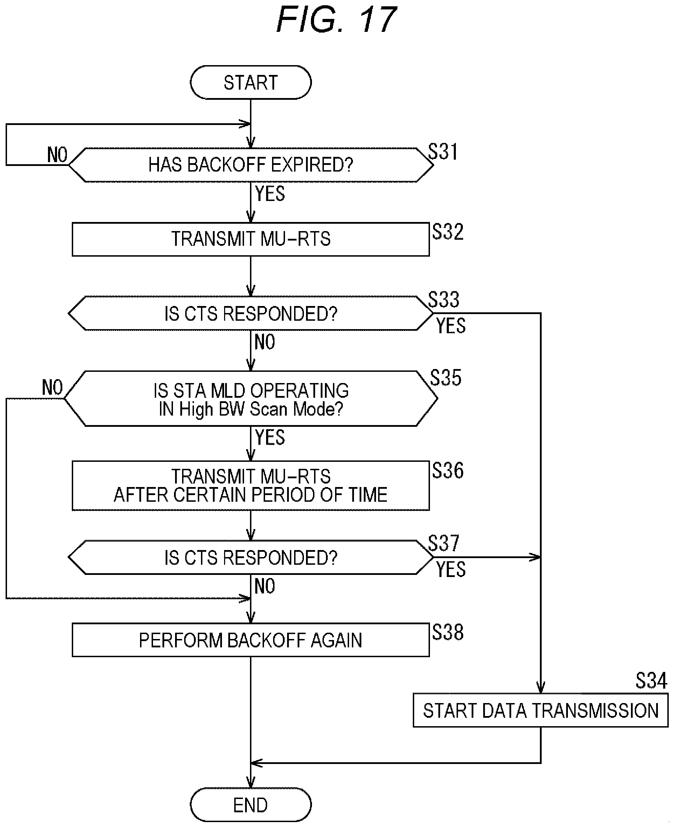

The flow of the operation of the AP MLD 10 in the EMLSR High BW Scan Mode will be described with reference to the flowchart of Fig. 17. The operation of Fig. 17 is executed for either Link1 or Link2, in other words, for either the AP1 or the AP2.

In step S31, the wireless communication unit 110 (communication control unit 161) determines whether or not the backoff has expired. Step S31 is repeated until the backoff expires.

When it is determined that the backoff has expired, the process proceeds to step S32, and the wireless communication unit 110 transmits the MU-RTS to the STA MLD 20.

In step S33, the wireless communication unit 110 determines whether or not a CTS is responded from the STA MLD 20.

In a case where it is determined that the CTS is responded, the process proceeds to step S34, and the wireless communication unit 110 starts data transmission as it is.

On the other hand, in a case where it is determined in step S33 that the CTS is not responded, the process proceeds to step S35, and the wireless communication unit 110 determines whether or not the STA MLD 20 is operating in the EMLSR High BW Scan Mode. Specifically, in step S35, it is determined whether or not an EML Operating Mode Notification frame in which EMLSR High BW Scan Mode = 1 has been acquired in the EMLSR Setup Phase.

In a case where it is determined that the STA MLD 20 is operating in EMLSR High BW Scan Mode, that is, in a case where the wireless communication unit 110 has acquired the EML Operating Mode Notification frame in which EMLSR High BW Scan Mode = 1, the process proceeds to step S36.

In step S36, the wireless communication unit 110 waits for a certain period of time, that is, a certain period of time T_{wait} calculated by Formula (1), and then transmits (retransmits) the MU-RTS.

Thereafter, in step S37, the wireless communication unit 110 determines whether or not a CTS is responded from the STA MLD 20.

In a case where it is determined that the CTS is responded, the process proceeds to step S34, and the wireless communication unit 110 starts data transmission as it is.

On the other hand, in a case where it is determined in step S37 that the CTS is not responded, and in a case where it is determined in step S35 that the STA MLD 20 is not operating in EMLSR High BW Scan Mode, the process proceeds to step S38.

In step S38, the wireless communication unit 110 performs backoff again. At this time, the wireless communication unit 110 may start data transmission to another STA (STA1/STA2).

According to the above processing, when the AP MLD is notified that the STA MLD is operating in the EMLSR High BW Scan Mode, the AP MLD can wait for a certain period of time and retransmit the MU-RTS in a case where the MU-RTS is transmitted and the CTS is not returned. This makes it possible to avoid a conflict between the uplink and the downlink.

Note that the above-described embodiment can also be applied to a case where the AP MLD 10 transmits not the MU-RTS but a Trigger frame as a control signal to induce an uplink signal to the STA MLD 20.

### <6. Third Embodiment>

In the present embodiment, another example of avoiding the conflict between the switching to the PHY unit and the downlink transmission will be described.

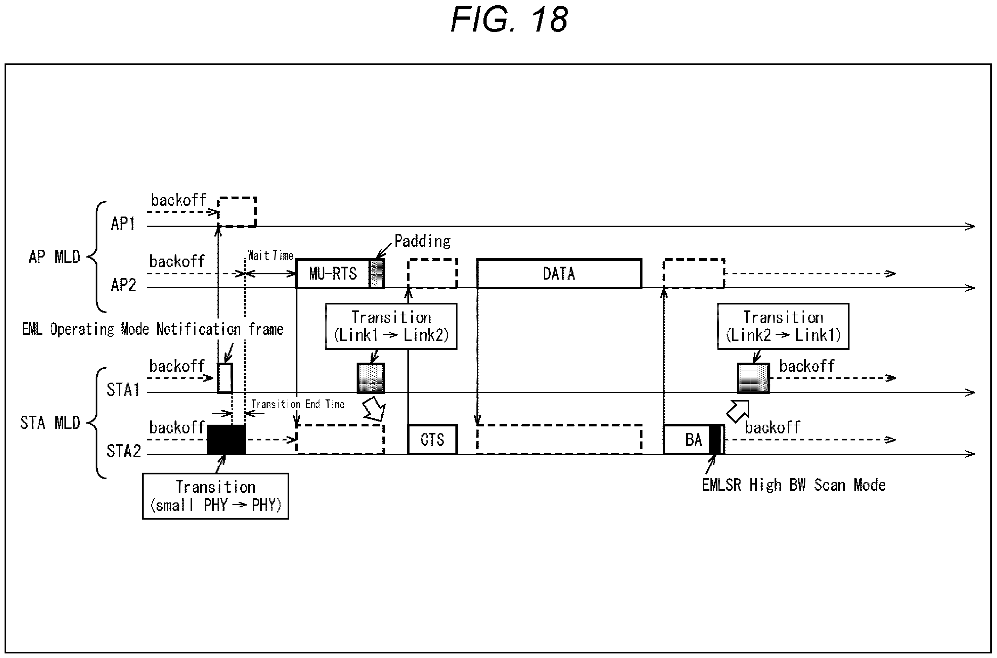

Fig. 18 is a sequence diagram of communication (during downlink transmission) in the third embodiment of the wireless LAN system according to the present disclosure.

The sequence diagram of Fig. 18 illustrates an example in a case where the STA1 first acquires the transmission right during the switching from the small PHY unit to the PHY unit in the STA2. Note that a similar sequence is applied to a case where the STA2 first acquires the transmission right during the switching from the small PHY unit to the PHY unit in STA1.

In a case where it takes time for the STA2 to switch to the PHY unit, the STA1 is more likely to expire the backoff first. Therefore, the STA1 transmits an EML Operating Mode Notification frame to the AP1 belonging to the AP MLD 10, thereby notifying that the STA2 is switching to the PHY unit (EMLSR Link Bitmap, EMLSR High BW Scan Mode) and its completion time (Transition End Time). Even when the AP2 acquires the transmission right on the basis of the notified information, the AP MLD 10 does not immediately transmit the MU-RTS and waits until the switching in the STA2 is completed. The AP MLD 10 waits for a certain period (Wait Time) based on the Transition End Time, and then transmits the MU-RTS. At this time, the AP MLD 10 may suppress frame transmission from peripheral terminals by transmitting a signal such as CTS-to-self.

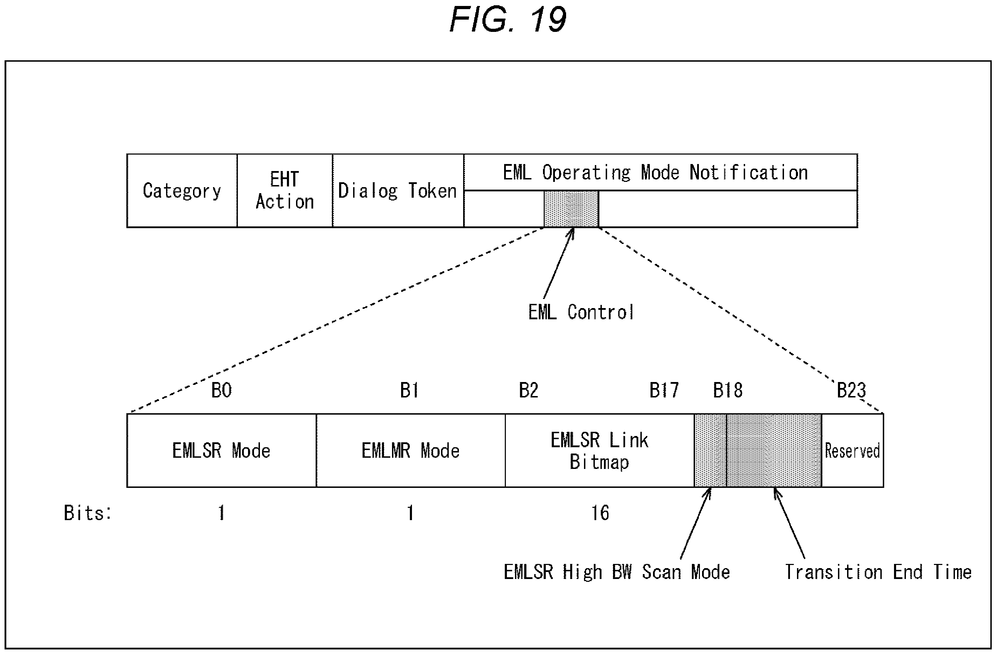

Fig. 19 is a diagram illustrating a configuration example of an EML Operating Mode Notification frame transmitted to the AP MLD 10 in the present embodiment.

The EML Operating Mode Notification frame of Fig. 19 is different from the EML Operating Mode Notification frame of Fig. 11 in that the EML Control field includes Transition End Time in addition to EMLSR High BW Scan Mode.

The Transition End Time is information regarding a completion time (or remaining time) required to complete switching from the small PHY unit to the PHY unit. The Transition End Time can be calculated on the basis of the EMLSR Delay included in the Multi-Link Element in Fig. 10.

In the technology according to the present disclosure, the configuration of the EML Operating Mode Notification frame is not limited to this, and is only required to include at least information regarding the EMLSR Link Bitmap, the EMLSR High BW Scan Mode, and the Transition End Time. Furthermore, the EML Operating Mode Notification frame in Fig. 19 is assumed to be configured as a MAC frame, but may be configured as a TCP/IP frame as long as the above-described information is described.

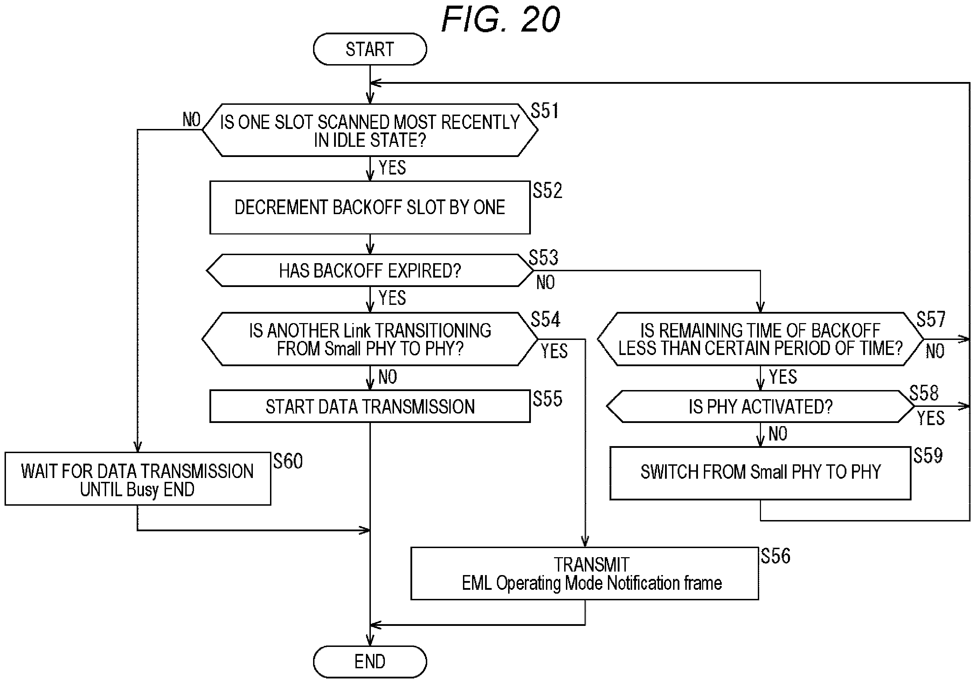

Here, the flow of the operation of the STA MLD 20 in the present embodiment will be described with reference to the flowchart of Fig. 20. The operation of Fig. 20 is performed for either Link1 or Link2, in other words, for either the STA1 or the STA2.

Note that steps S51 to S53 and S57 to S60 in the flowchart of Fig. 20 are processes similar to steps S11 to S13 and S15 to S18 in the flowchart of Fig. 14, respectively.

That is, in a case where it is determined in step S53 that the backoff has expired, the process proceeds to step S54, and the wireless communication unit 210 (communication control unit 261) determines whether or not another link (another STA) is transitioning (switching) from the small PHY unit to the PHY unit.

In a case where it is determined that the other link is not transitioning from the small PHY unit to the PHY unit, the process proceeds to step S55, and the wireless communication unit 210 starts data transmission as it is.

On the other hand, in a case where it is determined in step S54 that the other link is transitioning from the small PHY unit to the PHY unit, the process proceeds to step S56, and the wireless communication unit 210 transmits an EML Operating Mode Notification frame to the AP MLD 10 (AP of the link).

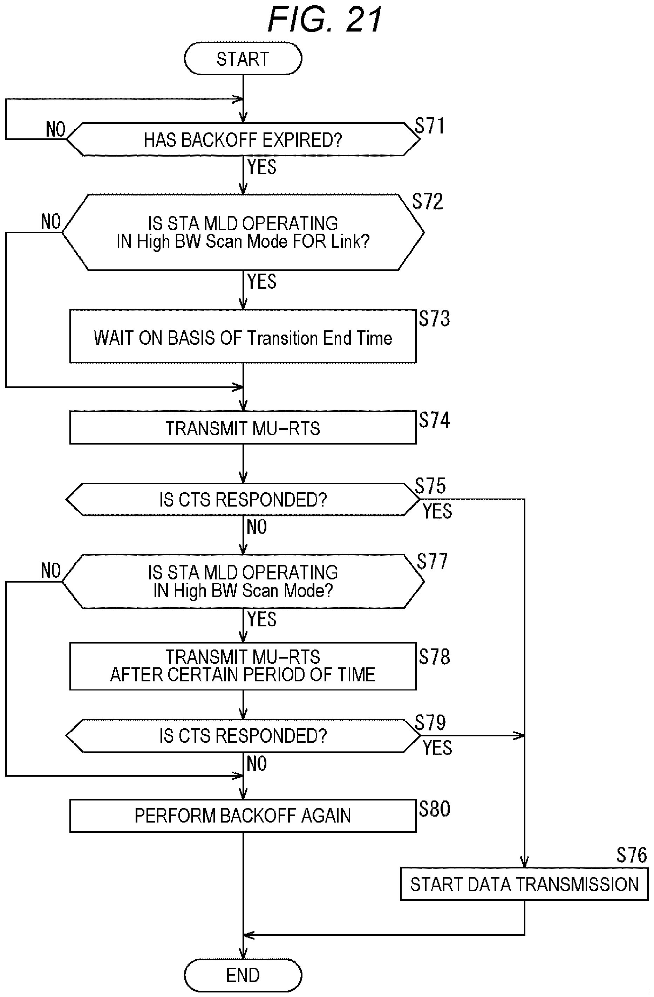

Next, the flow of the operation of the AP MLD 10 according to the present embodiment will be described with reference to a flowchart of Fig. 21. The operation of Fig. 21 is executed for either Link1 or Link2, in other words, for either the AP1 or the AP2.

Note that steps S71 and S74 to S80 in the flowchart of Fig. 21 are processes similar to steps S31 to S38 in the flowchart of Fig. 17, respectively.

That is, when it is determined in step S71 that the backoff has expired, the process proceeds to step S72, and the wireless communication unit 110 (communication control unit 161) determines whether or not STA MLD 20 is operating in the EMLSR High BW Scan Mode for the link. That is, in step S72, it is determined whether or not an EML Operating Mode Notification frame has been received from the STA MLD 20.

In a case where it is determined that the STA MLD 20 is operating in the EMLSR High BW Scan Mode for the link, the process proceeds to step S73, and the wireless communication unit 110 waits for a certain period of time on the basis of the Transition End Time included in the EML Operating Mode Notification frame. Thereafter, in step S74, the MU-RTS is transmitted.

On the other hand, in a case where it is determined in step S72 that the STA MLD 20 is not operating in the EMLSR High BW Scan Mode for the link, step S73 is skipped, and the MU-RTS is transmitted in step S74.

According to the above processing, the STA MLD notifies the AP MLD that the STA MLD is switching to the PHY unit in another link by using the free link, whereby the AP MLD can wait until the switching is completed even if the AP MLD acquires the transmission right in the link. This makes it possible to avoid a conflict between the uplink and the downlink.

### <7. Fourth Embodiment>

As described above, the transition of the link in the eMLSR mode is achieved by the three operations of:
(1) switching of switch SW;
(2) operation frequency change of RF unit; and
(3) activation of PHY unit (ON/OFF),
and the time required for each operation is different. At present, the maximum value of the times required for the three operations has been defined as "EMLSR Delay" (Fig. 10).

On the other hand, in the above-described embodiment, the operations of (1) and (3) are performed during the channel scanning (backoff), and the operations of (1) and (2) are performed at the end of the channel scanning (at the time of expiration of backoff). Therefore, there is a high possibility that the time required for the transition of the link varies depending on the situation.

In particular, since it is currently expected that the time required for the operation of (3) will be the largest, there is a possibility that the padding time of the MU-RTS determined by the EMLSR Delay can be shortened in a case where the PHY unit is not turned ON/OFF in the above-described embodiment.

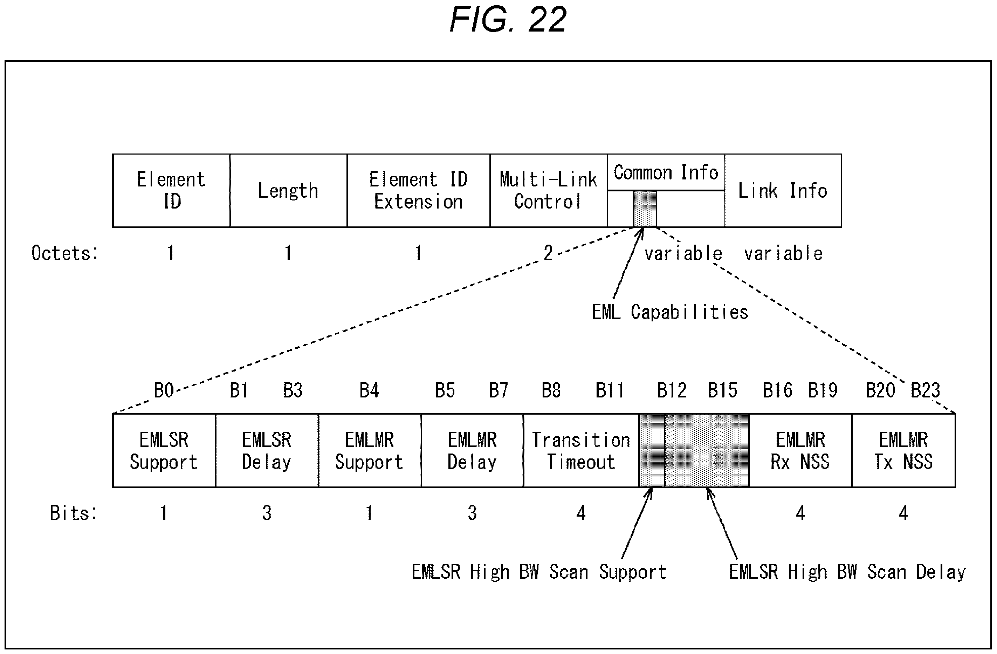

Fig. 22 is a diagram illustrating a configuration example of a Multi-Link Element exchanged between the AP MLD 10 and the STA MLD 20 in the present embodiment.

The Multi-Link Element in Fig. 22 is different from the Multi-Link Element in Fig. 10 in that Common Info includes EMLSR High BW Scan Delay in addition to EMLSR High BW Scan Support.

The EMLSR High BW Scan Delay is, for example, information regarding the time required for switching the switch SW and changing the operation frequency of the RF unit described above. That is, the EMLSR High BW Scan Delay can be said to be information indicating a waiting time required at the end of channel scanning (at the time of expiration of backoff). For example, in a case where the PHY unit is not turned ON/OFF, the value of the EMLSR High BW Scan Delay can be used instead of the value of the EMLSR Delay when determining the MU-RTS padding time.

As a result, the AP MLD 10 and the STA MLD 20 can appropriately determine the padding time, and it is possible to reduce the overhead related to the link transition in the eMLSR mode.

### <8. Summary>

According to the technology according to the present disclosure, an eMLSR-compatible STA MLD can perform channel scanning using the PHY unit only for a necessary period, and thus, it is possible to realize broadband uplink transmission while suppressing power consumption.

Further, when the AP MLD is notified that the STA MLD is operating in the EMLSR High BW Scan Mode, the AP MLD can wait for a certain period of time and retransmit the MU-RTS in a case where the MU-RTS is transmitted and the CTS is not returned. This makes it possible to avoid a conflict between the uplink and the downlink.

Further, the STA MLD notifies the AP MLD that switching is being performed to the PHY unit in another link by using the free link, so that the AP MLD can wait until the switching is completed even if the AP MLD acquires the transmission right in the link. This makes it possible to avoid a conflict between the uplink and the downlink.

Note that the effects described in the present specification are merely examples and are not limited, and other effects may be achieved.

Furthermore, embodiments to which the technology according to the present disclosure is applied are not limited to the above-described embodiments, and various modifications can be made without departing from the gist of the technology according to the present disclosure.

Moreover, the present disclosure may have the following configurations.
(1) A wireless communication terminal including:
   one PHY unit;
   a plurality of simple PHY units that performs channel scanning of each link; and
   a communication control unit that executes switching processing for switching from the simple PHY unit to the PHY unit during the channel scanning for one link in a case where uplink transmission to a wireless communication apparatus is performed.
(2) The wireless communication terminal according to (1), in which
   the communication control unit executes the switching processing for the link for which a transmission right is acquired.
(3) The wireless communication terminal according to (2), in which
   the communication control unit executes the switching processing when a remaining time in the channel scanning is less than a certain period of time.
(4) The wireless communication terminal according to (1), in which
   the communication control unit transmits information indicating whether or not the switching processing can be executed to the wireless communication apparatus.
(5) The wireless communication terminal according to (1), in which
   the communication control unit transmits information indicating whether or not a mode is a mode for executing the switching processing to the wireless communication apparatus.
(6) The wireless communication terminal according to (1), in which
   in a case where a transmission right is acquired in a second link while the switching processing is being executed for a first link, the communication control unit transmits information indicating that the switching processing is being executed for the first link and a completion time required for completion of the switching processing to the wireless communication apparatus.
(7) The wireless communication terminal according to (6), in which
   the completion time is calculated on a basis of information regarding a switching time required for the switching processing.
(8) The wireless communication terminal according to any one of (1) to (7), in which
   the communication control unit transmits information indicating a waiting time required at an end of the channel scanning to the wireless communication apparatus.
(9) A wireless communication method in which
   a wireless communication terminal including one PHY unit and a plurality of simple PHY units that performs channel scanning of each link is configured to
   execute switching processing for switching from the simple PHY unit to the PHY unit during the channel scanning for one link in a case where uplink transmission to a wireless communication apparatus is performed.
(10) A wireless communication apparatus including
   a communication control unit that communicates with a wireless communication terminal that performs channel scanning of each link by using a plurality of simple PHY units,
   in which in a case where the wireless communication terminal performs uplink transmission, the communication control unit acquires information indicating whether or not a mode is a mode for executing switching processing for switching from the simple PHY unit to the PHY unit during the channel scanning for one link.
(11) The wireless communication apparatus according to (10), in which
   when there is no response to a control signal transmitted to the wireless communication terminal in a case where the wireless communication terminal is in the mode, the communication control unit retransmits the control signal to the wireless communication terminal after a lapse of a certain period of time.
(12) The wireless communication apparatus according to (11), in which
   the certain period of time is calculated on a basis of information regarding a switching time required for the switching processing.
(13) The wireless communication apparatus according to (10), in which
   the communication control unit acquires, from the wireless communication terminal, information indicating that the switching processing is being executed for the one link and a completion time required to complete the switching processing.
(14) The wireless communication apparatus according to (13), in which
   the communication control unit waits for transmission of a control signal on a basis of the completion time when a transmission right is acquired in a second link in a case where the information indicating that the switching processing is being executed for a first link is acquired from the wireless communication terminal.
(15) The wireless communication apparatus according to (14), in which
   the completion time is calculated on a basis of information regarding a switching time required for the switching processing.
(16) A wireless communication method in which
   a wireless communication apparatus is configured to:
   communicate with a wireless communication terminal that performs channel scanning of each link by using a plurality of simple PHY units; and
   in a case where the wireless communication terminal performs uplink transmission, acquire information indicating whether or not a mode is a mode for executing switching processing for switching from the simple PHY unit to the PHY unit during the channel scanning for one link.

### REFERENCE SIGNS LIST

- 10: AP MLD
- 20: STA MLD
- 110: Wireless communication unit
- 161: Communication control unit
- 162: Communication storage unit
- 163: Common data processing unit (Upper MAC unit)
- 164: Individual data processing unit (Lower MAC unit)
- 165: Signal processing unit (PHY unit)
- 166: Wireless interface unit
- 167: Amplification unit
- 210: Wireless communication unit
- 261: Communication control unit
- 262: Communication storage unit
- 263: Common data processing unit (Upper MAC unit)
- 264: Individual data processing unit (Lower MAC unit)
- 265: Signal processing unit (PHY unit)
- 265s: Simple signal processing unit (small PHY unit)
- 266: Wireless interface unit
- 267: Amplification unit

## Claims

1. A wireless communication terminal comprising:
one PHY unit;
a plurality of simple PHY units that performs channel scanning of each link; and
a communication control unit that executes switching processing for switching from the simple PHY unit to the PHY unit during the channel scanning for one link in a case where uplink transmission to a wireless communication apparatus is performed.

2. The wireless communication terminal according to claim 1, wherein
the communication control unit executes the switching processing for the link for which a transmission right is acquired.

3. The wireless communication terminal according to claim 2, wherein
the communication control unit executes the switching processing when a remaining time in the channel scanning is less than a certain period of time.

4. The wireless communication terminal according to claim 1, wherein
the communication control unit transmits information indicating whether or not the switching processing can be executed to the wireless communication apparatus.

5. The wireless communication terminal according to claim 1, wherein
the communication control unit transmits information indicating whether or not a mode is a mode for executing the switching processing to the wireless communication apparatus.

6. The wireless communication terminal according to claim 1, wherein
in a case where a transmission right is acquired in a second link while the switching processing is being executed for a first link, the communication control unit transmits information indicating that the switching processing is being executed for the first link and a completion time required for completion of the switching processing to the wireless communication apparatus.

7. The wireless communication terminal according to claim 6, wherein
the completion time is calculated on a basis of information regarding a switching time required for the switching processing.

8. The wireless communication terminal according to claim 1, wherein
the communication control unit transmits information indicating a waiting time required at an end of the channel scanning to the wireless communication apparatus.

9. A wireless communication method wherein
a wireless communication terminal comprising one PHY unit and a plurality of simple PHY units that performs channel scanning of each link is configured to
execute switching processing for switching from the simple PHY unit to the PHY unit during the channel scanning for one link in a case where uplink transmission to a wireless communication apparatus is performed.

10. A wireless communication apparatus comprising
a communication control unit that communicates with a wireless communication terminal that performs channel scanning of each link by using a plurality of simple PHY units,
wherein in a case where the wireless communication terminal performs uplink transmission, the communication control unit acquires information indicating whether or not a mode is a mode for executing switching processing for switching from the simple PHY unit to the PHY unit during the channel scanning for one link.

11. The wireless communication apparatus according to claim 10, wherein
when there is no response to a control signal transmitted to the wireless communication terminal in a case where the wireless communication terminal is in the mode, the communication control unit retransmits the control signal to the wireless communication terminal after a lapse of a certain period of time.

12. The wireless communication apparatus according to claim 11, wherein
the certain period of time is calculated on a basis of information regarding a switching time required for the switching processing.

13. The wireless communication apparatus according to claim 10, wherein
the communication control unit acquires, from the wireless communication terminal, information indicating that the switching processing is being executed for the one link and a completion time required to complete the switching processing.

14. The wireless communication apparatus according to claim 13, wherein
the communication control unit waits for transmission of a control signal on a basis of the completion time when a transmission right is acquired in a second link in a case where the information indicating that the switching processing is being executed for a first link is acquired from the wireless communication terminal.

15. The wireless communication apparatus according to claim 14, wherein
the completion time is calculated on a basis of information regarding a switching time required for the switching processing.

16. A wireless communication method wherein
a wireless communication apparatus is configured to:
communicate with a wireless communication terminal that performs channel scanning of each link by using a plurality of simple PHY units; and
in a case where the wireless communication terminal performs uplink transmission, acquire information indicating whether or not a mode is a mode for executing switching processing for switching from the simple PHY unit to the PHY unit during the channel scanning for one link.
